# EUROPEAN PATENT APPLICATION

(11) **EP 4 610 397 A1**
(43) Date of publication of application: **03.09.2025**
(21) Application number: 24159804.4
(22) Date of filing: 27.02.2024
(51) Int. Cl.: C25B 1/04, C25B 15/02, H01M 8/0656, B60K 1/04

(54) **IN-VEHICLE HYDROGEN GENERATION AND STORAGE SYSTEM FOR HYDROGEN (FUEL CELL ELECTRIC VEHICLE) POWERED TRANSPORT VEHICLES**

(71) Applicant: Red Tensor B.V., 3072 DE Rotterdam (NL)
(72) Inventor: Kaya, Volkan, 3072 DE Rotterdam (NL)

(57) **Abstract**

The in-vehicle hydrogen generation unit represents a hydrogen production system designed specifically for Fuel Cell Electric Vehicles (FCEVs), marking a significant leap in sustainable transportation. During the electrolysis process, the byproduct oxygen is emitted into the atmosphere. Furthermore, the byproduct water generated during power generation using hydrogen is efficiently recycled back into the electrolysis system, creating a closed-loop and resource-efficient cycle. Notably, the electrolysis unit incorporates an integrated cooling system to maintain optimal operating temperatures during the electrolysis reaction.

## Description

The present technology is related to hydrogen generation and storage systems and, more particularly, to a method and apparatus for generating hydrogen to use as a fuel for fuel cell electric vehicles from an electric source and water. The apparatus will be installed on Fuel Cell Electric Vehicles to generate the required hydrogen directly on the Vehicle.

### INTRODUCTION

A Fuel Cell Electric Vehicle (FCEV), commonly known as a fuel cell car, operates as an electric vehicle by utilizing a fuel cell to power its onboard electric motor. Categorized under electric vehicles (EVs), hydrogen cars, or FCEVs, distinguish themselves from battery-powered electric cars (BEVs). Unlike BEVs relying on internal batteries, hydrogen cars produce electricity through a fuel cell, converting hydrogen from the fuel tank and ambient air oxygen into electrical energy through a process also known as reverse electrolysis. This process yields only three byproducts: electrical energy, heat, and water vapor, resulting in zero harmful emissions.

The electricity generated by the fuel cell can either directly propel the electric motor or charge a battery for temporary storage. Hydrogen cars present various advantages, including zero emissions, quick refueling times (in contrast to lengthy battery charging), an extended driving range compared to some BEVs, and quieter operation, contributing to a noise-reduced urban environment.

However, challenges and costs are associated with hydrogen cars, primarily related to infrastructure development for widespread hydrogen refueling, the efficiency and cost of hydrogen production and storage, and safety concerns in handling and storing hydrogen.

Looking toward the future, hydrogen holds promise, especially for heavy-duty vehicles like buses and trucks. Overcoming challenges through continued research and investment is crucial to making hydrogen a viable option for passenger cars.

Fuel Cell Electric Vehicles (FCEVs) face significant challenges related to the establishment of a comprehensive hydrogen refueling infrastructure. Unlike traditional gasoline or electric charging stations, hydrogen refueling stations are not as widespread. This limited availability makes it inconvenient for FCEV users to find refueling points, especially in regions where hydrogen infrastructure is still in its early stages.

Building and operating hydrogen refueling stations can be expensive. Specialized equipment for storing and dispensing hydrogen, along with safety measures, contributes to the overall costs. Additionally, the relatively low number of FCEVs on the road makes it challenging for private investors or governments to justify significant investments in infrastructure.

The "chicken-and-egg" dilemma further complicates matters. Without a sufficient number of FCEVs on the road, there is limited demand for hydrogen refueling stations. Conversely, potential FCEV buyers may hesitate to adopt the technology without a well-established and convenient refueling network.

Establishing hydrogen refueling stations requires suitable land, and zoning regulations may present obstacles in finding appropriate locations. Overcoming these regulatory hurdles and securing permits for station construction can be time-consuming.

On the flip side, the rapid embrace of electric vehicles has led to a significant expansion in Charging Infrastructure. While the majority of EV owners primarily charge their vehicles at home, the presence of publicly accessible charging stations plays a pivotal role in facilitating broader EV adoption. Public charging infrastructure ensures a level of convenience and accessibility comparable to refueling conventional gasoline vehicles. In densely populated urban areas, where home charging options are constrained, public charging stations emerge as a crucial facilitator for the widespread adoption of EVs.

Sustained investment in charging infrastructure is imperative to sustain the burgeoning EV market. Collaborative efforts involving governments, private companies, and automakers are underway to broaden the network and enhance accessibility. Anticipated innovations, such as ultra-fast chargers and wireless charging, hold the promise of providing even greater convenience for EV users.

More on the subject; electrolysis is a chemical process employing an electric current to drive a non-spontaneous chemical reaction. In this method, an electrolyte, typically a liquid or solution, undergoes a chemical transformation when subjected to an electric current. The essential elements of this process include:
Electrolyte: This refers to the substance undergoing electrolysis, such as water, molten salts, or aqueous solutions. The electrolyte contains ions capable of moving freely within the solution.
Electrodes: These are conductive materials, usually metal or graphite, immersed in the electrolyte. Two types of electrodes are present: the anode and the cathode.
Anode and Cathode: The anode attracts negatively charged ions (anions) and undergoes oxidation by losing electrons. On the other hand, the cathode attracts positively charged ions (cations) and undergoes reduction by gaining electrons.

Electrolysis finds various applications, including Hydrogen Production where water electrolysis generates hydrogen gas, serving as a clean fuel source.

Similarly, photosynthesis is a vital process that occurs in green plants and certain other organisms. It allows them to transform light energy into chemical energy. The following is a concise explanation of the full cycle:
1. Light Absorption: During photosynthesis, plants capture light energy from the sun using specialized pigments called chlorophyll. These pigments are found in the chloroplasts of plant cells.
2. Light-Dependent Reactions:
   a) Photolysis: Water molecules (H₂O) are split into oxygen (O₂) and protons (H⁺) using light energy. This process is called photolysis.
   b) Electron Transport Chain: The excited electrons from photolysis move through a series of proteins in the thylakoid membrane, creating a flow of protons across the membrane.
   c) ATP Synthesis: The proton flow generates ATP (adenosine triphosphate), which is an energy-rich molecule.
3. Calvin Cycle (Light-Independent Reactions):
   a) Carbon Fixation: Carbon dioxide (CO₂) from the air is captured and combined with a five-carbon compound called ribulose-1,5-bisphosphate (RuBP) to form an unstable six-carbon compound.
   b) Reduction Phase: ATP and NADPH (nicotinamide adenine dinucleotide phosphate) from the light-dependent reactions are used to convert the unstable six-carbon compound into two molecules of 3-phosphoglycerate (3-PGA) .
   c) Regeneration of RuBP: Some 3-PGA molecules are converted back into RuBP, ensuring the continuation of the cycle.
   d) Glucose Formation: The remaining 3-PGA molecules undergo further reactions, ultimately producing glucose (C₆H₁₂O₆) and other organic compounds.
4. Output:
   a) Oxygen Release: Oxygen gas (O₂) is released as a byproduct during photolysis.
   b) Glucose Production: Glucose serves as an energy-rich molecule that fuels plant growth and metabolism.
   c) ATP and NADPH: These energy carriers are used in various cellular processes.

In summary, photosynthesis converts light energy into chemical energy stored in glucose, while releasing oxygen into the atmosphere. It plays a crucial role in maintaining life on Earth by providing food and oxygen for organisms.

Fundamentally, the complete process of photosynthesis closely resembles that of electrolysis. During photosynthesis, energy and water are utilized to transform carbon atoms into an energy source (reserved for later use) and oxygen. Conversely, in electrolysis, electricity and water are employed to produce an energy source hydrogen (reserved for later use) and oxygen.

US7703564B2 focuses on fuel cell vehicles, which use hydrogen fuel cells to generate electricity for propulsion. These vehicles are considered environmentally friendly because they produce only water vapor as a byproduct. The invention has following components:
1) Fuel Cell Stack: The patent describes the design and operation of the fuel cell stack, which contains individual fuel cells that convert hydrogen and oxygen into electricity.
2) Hydrogen Storage: It covers methods for storing and delivering hydrogen to the fuel cell stack.
3) Powertrain Integration: The patent address how the fuel cell system integrates with other vehicle components, such as electric motors and batteries.

The invention also explores the efficiency and performance of the invention with details related to efficiency, power output, and overall performance of a fuel cell vehicle.

### SUMMARY

The invention is defined by the appended independent claims. Additional features and advantages of the concepts disclosed herein are set forth in the description which follows, and in part will be obvious from the description, or may be learned by practice of the described technologies. The features and advantages of the concepts may be realized and obtained by means of the instruments and combinations particularly pointed out in the appended claims.

These and other features of the described technologies will become more fully apparent from the following description and appended claims, or may be learned by the practice of the disclosed concepts as set forth herein.

The present disclosure outlines techniques and configurations for a Hydrogen Generation and Storage System designed for Hydrogen-Powered Transport Vehicles, specifically Fuel Cell Electric Vehicles. The system facilitates in-vehicle hydrogen generation directly connected to the vehicle's hydrogen storage using the hydrogen fueling nozzle structure of the vehicle and hydrogen flow controllers. However, the integration is not limited to hydrogen fueling nozzle structure and can be implemented through separate connection. And, the configurations are under the oversight of an Electronic Control Unit (240), which utilizes pressure switches, sensors, actuators, pumps and valves for control.

The present disclosure additionally incorporates an oxygen exhaust component designed to expel the byproduct resulting from the water electrolysis process.

The present disclosure also encompasses a water vapor collection tank intended for gathering and recycling the produced water during the power generation utilizing hydrogen and oxygen.

The present disclosure finally encompasses an electrolysis water cooling unit tasked with lowering the temperature of the water that accumulates heat during the water electrolysis process.

### TERMINOLOGY

Tuba (200): It refers to the invention and the name is inspired by The Tree of Life which is a widespread and symbolic concept found in various world beliefs, mythologies, and religious traditions. While interpretations and details may vary, the concept generally represents a connection between all forms of creation and the source of life. In summary, the Tree of Life is a cross-cultural and timeless symbol that embodies interconnectedness, spiritual wisdom, and the cyclical nature of existence in many world beliefs and mythologies. Interpretations may vary, but the essence often involves a connection between the divine, the earthly, and the cycle of life and death.

Water Electrolysis with Cooling Unit (211): It refers to a component in the process of generating hydrogen and oxygen through electrolysis. This unit is equipped with a built-in water-cooling system (225) to manage its temperature during operation. As the main device responsible for splitting water molecules, it produces hydrogen and oxygen as byproducts. To power the electrolysis process, the unit receives electricity from the Battery Powered Electric Car Charging Unit via a Charge Connector (210).

Low Pressure Hydrogen Flow Controller (212): It refers to a component designed to regulate and control the flow of hydrogen gas in a system where the pressure is relatively low.

Low Pressure Hydrogen Tank with Pump (213): It refers a component designed to store hydrogen gas generated during hydrogen production and transfer it from low-pressure conditions to high-pressure tanks.

High Pressure Hydrogen Flow Controller (214): It refers to a component designed to regulate and control the flow of hydrogen gas in a system where the pressure is relatively high.

Hydrogen Flow Controller (215): It refers to a component designed to regulate and control the flow of hydrogen gas in a system where the pressure is relatively high.

Hydrogen Storage of Fuel Cell Electric Vehicle (216): It refers to main hydrogen tank of a Fuel Cell Electric Vehicle (FCEV).

FCEV Power Generation Process (217): It refers to a process to generate electricity from hydrogen and oxygen. The byproduct of this process is water vapor.

Water Vapor Collector with Pump (218): It refers to a component designed to collect the water vapor which is a byproduct of FCEV Power Generation Process (217). The collected water is put back into Water Electrolysis with Cooling Unit (211) to be used in hydrogen generation process.

Electrolysis Water External Inlet (219): It refers to a component designed to add water into the electrolytic cell where the electrolysis process occurs.

Cooling Liquid External Inlet (220): It refers to a component designed to add cooling liquid into the Electrolysis Water Cooling Unit (225).

Electrolysis Water Cooling Unit (225): It refers to a component designed to cool the electrolysis water that electrolysis process occurs.

Oxygen Exhaust (230): It refers to a component designed to emit the produced oxygen into the atmosphere.

Electronic Control Unit (240): It refers to a dedicated computer that manages and controls different electrical and electronic systems within a vehicle during the hydrogen generation process. The ECU interprets data from various sensors, makes decisions based on pre-programmed algorithms, and sends commands to actuators, ensuring optimal performance, efficiency, and safety.

### BRIEF DESCRIPTION OF THE DRAWINGS

In order to best describe the manner in which the above-described embodiments are implemented, as well as define other advantages and features of the disclosure, a more particular description is provided below and is illustrated in the appended drawings.

Understanding that these drawings depict only exemplary embodiments of the invention and are not therefore to be considered to be limiting in scope, the examples will be described and explained with additional specificity and detail through the use of the accompanying drawings in which:
FIG. 1 illustrates an example Fuel Cell Electric Vehicle (FCEV);

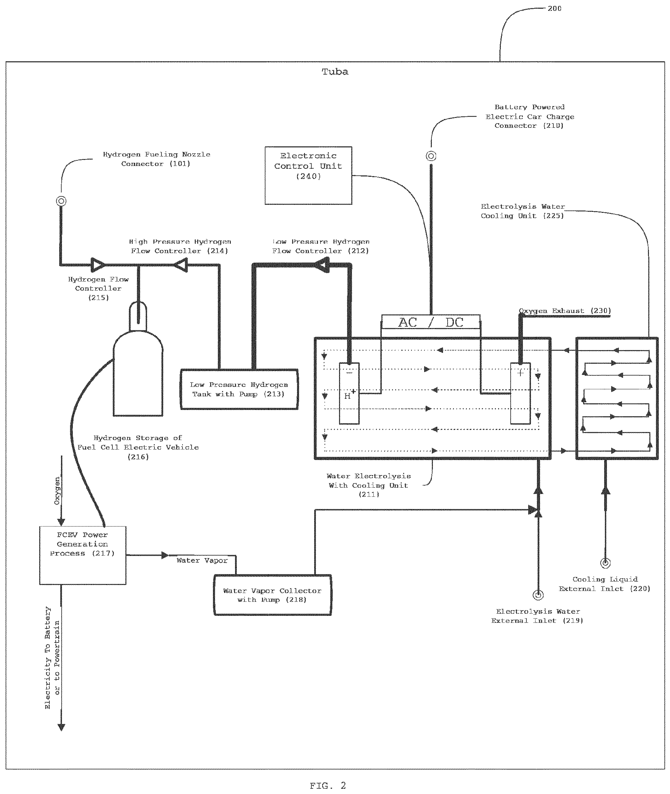

FIG. 2 illustrates an exemplar of the Tuba system, showcasing in-vehicle hydrogen generation and storage designed for hydrogen-powered transport vehicles, specifically Fuel Cell Electric Vehicles (FCEVs).

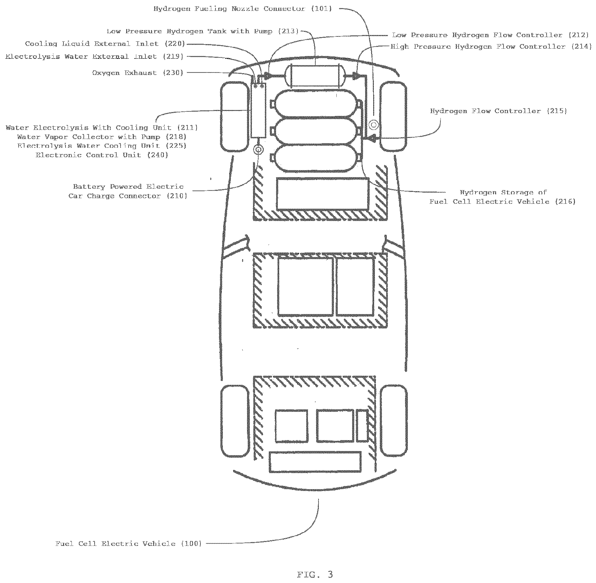

FIG. 3 illustrates a representative example of the invention (Tuba system) installed on a Fuel Cell Electric Vehicle (FCEV).

### DETAILED DESCRIPTION

Various embodiments of the disclosed methods and arrangements are discussed in detail below. While specific implementations are discussed, it should be understood that this is done for illustration purposes only. A person skilled in the relevant art will recognize that other components, configurations, and steps may be used without parting from the spirit and scope of the disclosure.

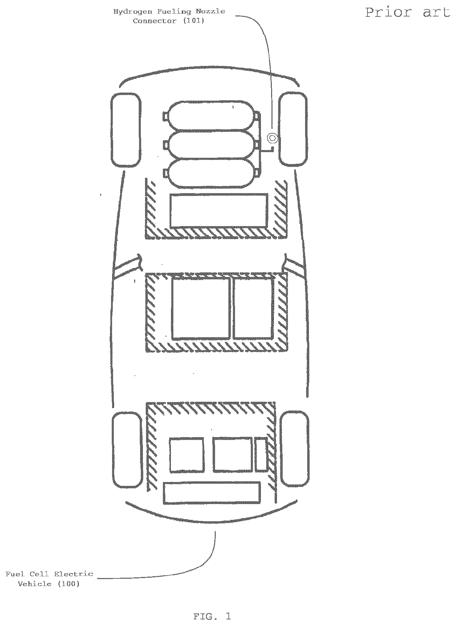

With reference to FIG. 1, a Traditional Fuel Cell Electric Vehicle **100** with Hydrogen Fueling Nozzle Connector **101** is shown.

In the conventional setup of Fuel Cell Electric Vehicles (FCEVs), hydrogen generation typically occurs at a dedicated facility. When FCEVs consume the hydrogen stored in their tanks, they are refueled with additional hydrogen from external sources through Hydrogen Fueling Nozzle Connector **101.**

Generating hydrogen in-vehicle through water electrolysis is a process that uses electricity to split water (H₂O) into its constituent elements: hydrogen (H⁺) and hydroxide (OH⁻) ions. And requires a direct current (DC) (directly or indirectly by converting Alternative Current (AC) into Direct Current (DC)) electrical power source is connected to two electrodes (usually made of inert metals like platinum or iridium) immersed in water. And the two electrodes are placed in the water, and the process occurs within Water Electrolysis with Cooling Unit **211,** an electrolyzer.

As a result, at the cathode (negative electrode), electrons enter the water. Here, hydrogen ions (H⁺) gain electrons and are reduced to form hydrogen gas (H₂). And, at the anode (positive electrode), water molecules lose electrons. Here, hydroxide ions (OH⁻) are oxidized to produce oxygen gas (O₂). The net result of water electrolysis is 2H₂ and O₂.

To ensure the system operates seamlessly, it is crucial to verify that the designated water tanks are adequately filled. Once the system is prepared, proceed by connecting the electrical power source to the Battery Powered Electric Car Charge Connector **210.** This action will activate the Electronic Control Unit **240,** which oversees the system's operation. If the power source is Direct Current (DC), the system will function without the need for AC/DC conversion. However, if the power source is Alternating Current (AC), an initial AC/DC conversion will occur. The Electronic Control Unit **240** will monitor the process, controlling pressure sensors and the Low Pressure Hydrogen Flow Controller **212.** This ensures that the generated hydrogen (H₂) is initially collected in the low-pressure hydrogen tank with Pump **213.** Simultaneously, the generated oxygen (O₂) will be directly sent to the Oxygen Exhaust **230.**

When Low Pressure Hydrogen Tank with Pump **213** reaches its maximum allowed pressure point the Electronic Control Unit **240** will stop the electrolysis process (and hydrogen generation) and will activate the built-in pump to pump the generated hydrogen (H₂) to Hydrogen Storage of Fuel Cell Electric Vehicle **216** through High Pressure Hydrogen Flow Controller **214.** The process will continue until the pressure on Hydrogen Storage of Fuel Cell Electric Vehicle **216** reaches the maximum allowed limit. Upon reaching the limit, the system will continue to produce hydrogen (H₂) until Low Pressure Hydrogen Tank with Pump **213** reaches its maximum allowed pressure point, which will trigger Electronic Control Unit **240** to stop the electrolysis process. By doing so the Low Pressure Hydrogen Tank will act as a reserve hydrogen tank, and can be used when Hydrogen Storage of Fuel Cell Electric Vehicle **216** reaches a pressure point below the pressure point of Low Pressure Hydrogen Tank with Pump **213.** In that case, the Electronic Control Unit **240** will initiate the process to pump the remaining hydrogen (H₂) to be transferred to Hydrogen Storage of Fuel Cell Electric Vehicle **216.**

Depending on the applied electrical current, the system generates heat during the water electrolysis process. To prevent overheating, the Electrolysis Water Cooling Unit **225** comes into play. This unit features a closed-circuit coolant element that efficiently collects excess heat from the electrolysis water. By maintaining optimal temperatures, the water remains conducive for the electrolysis reaction. If cooling liquid drops to an inadequate level, it is possible to add additional cooling liquid to Electrolysis Water Cooling Unit **225** using Cooling Liquid External Inlet **220.**

As this system is an additional unit to traditional FCEVs, it is always possible to refill the Hydrogen Storage of the Vehicle directly with externally produced Hydrogen through Hydrogen Fueling Nozzle Connector **101.**

During the power generation process in an FCEV (Fuel Cell Electric Vehicle) **217,** hydrogen (H₂) from the Hydrogen Storage of the Fuel Cell Electric Vehicle **216,** along with ambient oxygen, is utilized to produce electricity. This generated electricity can be directly supplied to the powertrain or stored in the FCEV's battery. The byproduct of the FCEV power generation process **217** is collected using the Water Vapor Collector with Pump **218.** The built-in pump is employed to return the collected water back to the Water Electrolysis with Cooling Unit **211.** In the event of a drop in the electrolysis water level, additional electrolysis water can be introduced into the Water Electrolysis with Cooling Unit **211** through the Electrolysis Water External Inlet **219.**

## Claims

1. On-Demand Hydrogen Production: The system generates hydrogen gas on-demand within the vehicle, eliminating the need for external hydrogen refueling stations. The system has following key components to achieve in-vehicle hydrogen generation: Battery Powered Electric Car Charge Connector **210,** Water Electrolysis Unit With Water Cooling **211,** Low Pressure Hydrogen Tank with Pump **213,** Water Vapor Collector with Pump **218,** Electrolysis Water Cooling Unit **225,** Electronic Control Unit **240.**

2. Electrolysis-Based Technology: The unit utilizes electrolysis to split water molecules into hydrogen and oxygen. This process occurs when an electric current passes through water, resulting in the production of hydrogen gas. The byproduct of electrolysis is oxygen (O₂), which serves as the essential source of life on Earth.

3. Integration with Fuel Cell Stack: The generated hydrogen is directly supplied to the fuel cell stack, where it combines with oxygen (O₂) from the ambient air to produce electricity. This seamless integration ensures efficient power generation for the vehicle.

4. Compact and Lightweight Design: The in-vehicle hydrogen generation unit is designed to be compact and lightweight, minimizing its impact on vehicle space and weight distribution.

5. Safety Measures: Robust safety features are incorporated, including pressure relief valves, leak detection, and thermal management to ensure safe hydrogen production and storage.

6. Reduced Dependency on Hydrogen Infrastructure: By generating hydrogen internally, the vehicle reduces its reliance on external hydrogen infrastructure, making it suitable for regions with limited refueling stations.

7. Environmental Benefits: In-vehicle hydrogen generation, powered by renewable energy sources (such as solar or wind power), produces hydrogen, resulting in significantly lower carbon emissions compared to traditional internal combustion engines. This innovative approach supports cleaner and greener transportation.

8. Scalability and Adaptability: The technology can be scaled for different vehicle types and adapted to various power requirements, from passenger cars to commercial trucks.

9. Pioneering Innovation: The in-vehicle hydrogen generation unit represents a significant step toward achieving sustainable and emission-free mobility, aligning with global efforts to combat climate change.
